(19) **Europäisches Patentamt / European Patent Office / Office européen des brevets**

(11) **EP 1 947 724 B1**

(12) **EUROPEAN PATENT SPECIFICATION**

(45) Date of publication and mention of the grant of the patent:
**19.05.2010 Bulletin 2010/20**

(21) Application number: **06811183.0**

(22) Date of filing: **04.10.2006**

(51) Int Cl.:
*H01M 8/04* (2006.01)          *H01M 8/10* (2006.01)

(86) International application number:
**PCT/JP2006/319843**

(87) International publication number:
**WO 2007/040239 (12.04.2007 Gazette 2007/15)**

(54) **COUPLER FOR FUEL CELL AND FUEL CELL USING SAME**

KOPPLER FÜR EINE BRENNSTOFFZELLE UND BRENNSTOFFZELLE DAMIT

COUPLEUR POUR PILE À COMBUSTIBLE ET PILE À COMBUSTIBLE L'UTILISANT

(84) Designated Contracting States:
**DE**

(30) Priority: **05.10.2005 JP 2005292530**
**14.06.2006 JP 2006164853**

(43) Date of publication of application:
**23.07.2008 Bulletin 2008/30**

(73) Proprietor: **Kabushiki Kaisha Toshiba**
**Minato-ku,**
**Tokyo 105-8001 (JP)**

(72) Inventors:
• **TAKAHASHI, Kenichi**
**Minato-ku Tokyo 105-8001 (JP)**

• **KAWAMURA, Koichi**
**Minato-ku Tokyo 105-8001 (JP)**
• **HASEBE, Hiroyuki**
**Minato-ku Tokyo 105-8001 (JP)**

(74) Representative: **Henkel, Feiler & Hänzel**
**Patentanwälte**
**Maximiliansplatz 21**
**80333 München (DE)**

(56) References cited:
**JP-A- 2003 142 135     JP-A- 2004 127 824**
**JP-A- 2006 309 978     US-A- 3 043 542**
**US-A1- 2005 022 883**

EP 1 947 724 B1

## Description

Technical Field

The present invention relates to a coupler used as a coupling mechanism for a fuel cell and a fuel cartridge, and to a fuel cell using the same.

Background Art

In recent years, to make various portable electronic apparatuses such as laptop computers and mobile phones usable for a long period of time without charging, it is attempted to use fuel cells for power supply of these portable electronic apparatuses. Fuel cells are capable of generating electric power just by being supplied with fuel and air, and have a characteristic of being able to generate electric power continuously for long time by supplying fuel only. Accordingly, if a fuel cell can be miniaturized, it can be considered as a system having a great advantage as a power supply for a portable electronic apparatus.

Direct methanol fuel cells (DMFC) using methanol fuel which has high energy density are capable of being miniaturized and are also simple in handling of fuel, and hence they are hopefully expected as power supply for portable apparatuses. As methods of supplying liquid fuel in a DMFC, there are known active method of gas supply type, liquid supply type, or the like, and passive method of internal vaporization type, in which liquid fuel in a fuel containing unit is vaporized in the cell and then supplied to a fuel anode, or the like. Among them, the active method is capable of increasing the output (increasing the electric power) of the DMFC, and thus it is expected as a power supply for a laptop computer or the like.

The passive method of internal vaporization type or the like does not need an active fuel transfer unit such as a fuel pump, and hence it is advantageous for miniaturization of the DMFCs in particular. For example, in patent document 1 and patent document 2, passive type DMFCs are disclosed, which have a fuel permeating layer retaining liquid fuel and a fuel vaporizing layer which diffuses vaporized components of the liquid fuel retained in the fuel permeating layer and supplies the components to a fuel anode. Such a passive type DMFC is expected as a power supply for a small portable apparatus such as portable audio player or cell phone.

In an active type DMFC, a fuel cartridge containing liquid fuel is coupled to a fuel cell body, and from this fuel cartridge, the liquid fuel is circulated directly or via a fuel containing unit (dilution-adjustment tank or the like) to thereby supply the liquid fuel to the fuel cell unit. On the other hand, a passive type DMFC of internal vaporization type or the like has a fuel containing unit and a mechanism to vaporize liquid fuel, and liquid fuel is supplied to the fuel containing unit using a fuel cartridge, similarly to the active type. In a fuel cartridge of satellite type (external injection method), it is attempted to block and inject liquid fuel using a coupler constituted of a nozzle part and a socket part which include valve mechanisms respectively (for example, refer to patent document 3).

The passive type DMFC of internal vaporization type or the like is currently miniaturized for mounting in a portable electronic apparatus for example, and consequently, the socket part on the DMFC side and the nozzle part on the fuel cartridge side also tend to be reduced in diameter. When such a nozzle part and a socket part are coupled and liquid fuel is injected from the fuel cartridge to the fuel containing unit of a DMFC, the miniaturized nozzle part has a risk of being damaged when a force such as a bending load is applied to the fuel cartridge.

The fuel cartridge blocks liquid fuel by the valve mechanism included in the nozzle part, and thus there is a risk that the liquid fuel contained in the fuel cartridge leaks when the nozzle part is damaged. Although the valve mechanism itself may not be damaged when the nozzle is damaged, a component of the valve mechanism may project and thereby generate a risk of leakage of liquid fuel by accidental operation of the valve mechanism. The possibility for the nozzle unit to be damaged becomes higher as the diameter thereof becomes smaller.

In particular, for the nozzle part of a DMFC fuel cartridge, there is considered use of super engineering plastics such as polyetheretherketone (PEEK), polyphenylene sulfide (PPS), liquid polymer (LCP), or the like, or general-purpose engineering plastics such as polyethylene terephthalate (PET), polybutylene terephthalate (PBT), polyacetal (POM), or the like having methanol resistance, but since they are rigid and have poor toughness, they have a drawback of being easily broken by a bending load.

[Reference 1] JP-B2 3413111
[Reference 2] JP-A 2004-171844 (KOKAI)
[Reference 3] JP-A 2004-127824 (KOKAI)

US 2005/0022883 A1 discloses a shut-off valve or connecting valve capable of connecting a fuel supply to a fuel cell. The valve comprises a first valve component and a second valve component. Each valve component has an outer housing and a biased slidable member disposed inside the housing forming an internal seal. The bias is effected by means of biasing springs in the form of helical or coil springs or rubber springs. In one embodiment the valve components remain connected to each other by a snap-on retainer which comprises a spring-loaded arm which is connected to one of the valve components and has head at its distal end that is sized and dimensioned to be received in a corresponding cavity located on the outer surface of the other valve component.

Disclosure of the Invention

An object of the present invention is to provide a fuel cell coupler which enables to suppress a occurrence of a problem due to damage of a nozzle part of a fuel cartridge, and a fuel cell to which such a coupler is applied.

A fuel cell coupler according to the present invention has the features of claim 1.

A fuel cell according to the present invention has the features of claim 14.

Preferred embodiments of the fuel cell coupler and of the fuel cell are defined in the dependent claims.

Brief Description of Drawings

[FIG. 1] FIG. 1 is a view showing the structure of a fuel cell according to an embodiment of the present invention.

[FIG. 2] FIG. 2 is a cross-sectional view showing structures (non-coupled state) of a nozzle part and a socket part of a fuel cell according to a first embodiment of the present invention.

[FIG. 3] FIG. 3 is a cross-sectional view showing a coupled state of the nozzle part and the socket part shown in FIG. 2.

[FIG. 4] FIG. 4 is a cross-sectional view showing structures (non-coupled state) of a nozzle part and a socket part of a fuel cell according to a second embodiment of the present invention.

[FIG. 5] FIG. 5 is a cross-sectional view showing a valve applied to the nozzle part shown in FIG. 4.

[FIG. 6] FIG. 6 is a cross-sectional view showing a modification example of the valve shown in FIG. 5.

[FIG. 7] FIG. 7 is a cross-sectional view showing a state that an insertion portion of the nozzle part shown in FIG. 4 is damaged.

[FIG. 8] FIG. 8 is a cross-sectional view showing a modification example of the nozzle part shown in FIG. 4.

[FIG. 9] FIG. 9 is a cross-sectional view showing a state that an insertion portion of the nozzle part shown in FIG. 8 is damaged.

[FIG. 10] FIG. 10 is a cross-sectional view showing a structure example of a fuel cell body according to embodiments of the present invention.

Explanation of Codes

1, 31 ... fuel cell; 2 ... fuel cell unit; 3 ... fuel containing unit; 4 ... fuel cell body; 5 ... fuel cartridge; 6 ... socket part (female side coupler); 8 ... cartridge body; 9 ... nozzle part (male side coupler); 11 ... base portion; 12 ... insertion portion; 14, 24 ... valve; 14a, 24a ... valve head; 14b, 24b ... valve body; 14c, 24c ... valve stem; 15, 25 ... valve seat; 16, 26 ... O-ring; 17, 27 ... compression spring; 18 ... guide groove; 21 ... socket body; 23 ... rubber holder; 29 ... key section; 32 ... stem base; 33 ... stem tip; 51 ... vapor selecting and permeating film.

Best Mode for Carrying out the Invention

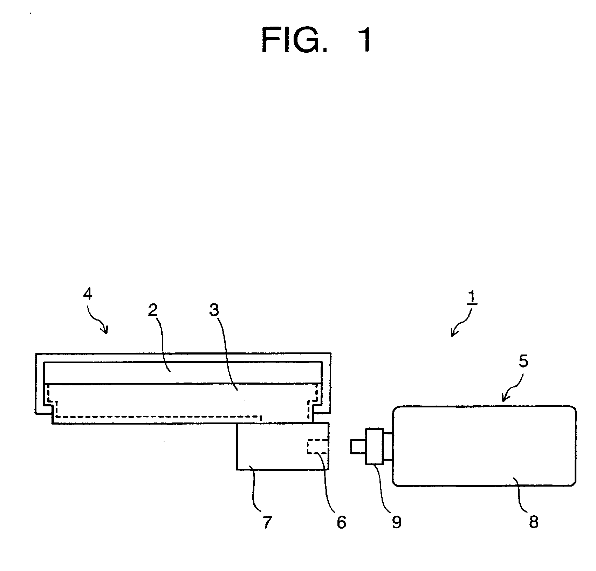

Hereinafter, embodiments of the present invention will be described. FIG. 1 is a view showing the structure of a fuel cell according to an embodiment of the present invention. The fuel cell 1 shown in FIG. 1 includes a fuel cell body 4 constituted mainly of a fuel cell unit 2 as an electromotive unit and a fuel containing unit 3, and a satellite type (external injection type) fuel cartridge 5 supplying liquid fuel to the fuel containing unit 3. On a bottom surface side of the fuel containing unit 3, a fuel supply unit 7 is provided having a socket part 6 as a supply port of liquid fuel. The socket part 6 includes a valve mechanism as will be described in detail later and is in a closed state other than when being supplied with liquid fuel.

On the other hand, the fuel cartridge 5 has a cartridge body (container) 8 containing liquid fuel for the fuel cell. On a tip of the cartridge body 8, a nozzle part 9 is provided to be a fuel injection port when supplying the liquid fuel contained therein to the fuel cell body 4. The nozzle part 9 includes a valve mechanism as will be described in detail later and is kept in a closed state other than when supplying the liquid fuel. The fuel cartridge 5 as such is coupled to the fuel cell body 4 only when injecting the liquid fuel into the fuel containing unit 3 for example.

The cartridge body 8 of the fuel cartridge 5 contains liquid fuel corresponding to the fuel cell body 4, for example, methanol fuel such as methanol solution, pure methanol, or the like with a respective concentration in the case of a direct methanol fuel cell (DMFC). The liquid fuel contained in the cartridge body 8 is not limited to methanol fuel and may be liquid fuel of, for example, ethanol fuel such as ethanol solution and pure ethanol, propanol fuel such as propanol solution and pure propanol, glycol fuel such as glycol solution and pure glycol, dimethyl ether, formic acid, or the like. In any case, the liquid fuel corresponding to the fuel cell body 4 is contained.

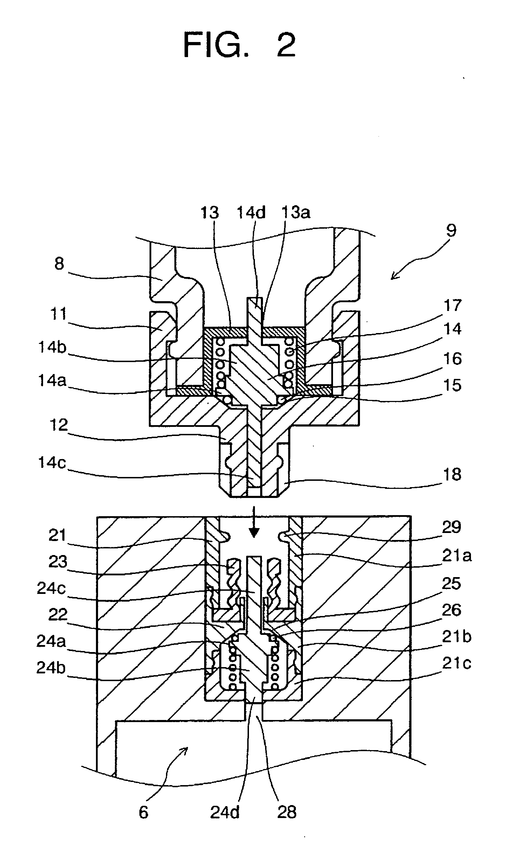

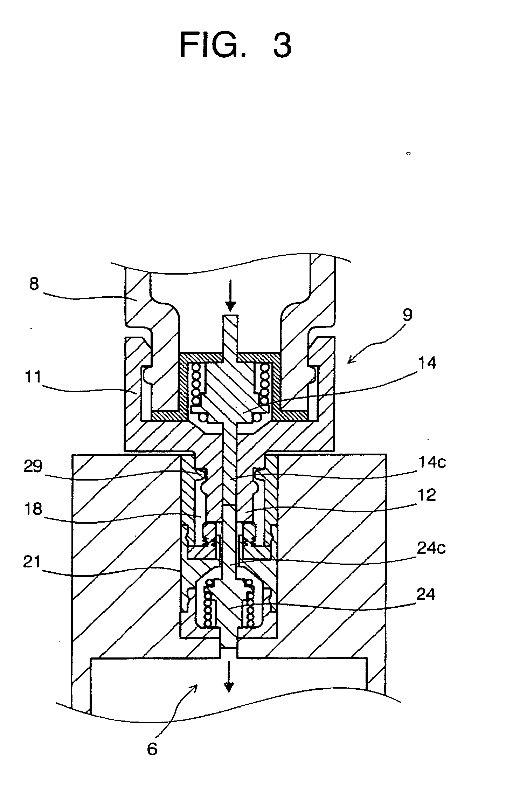

The socket part 6 provided on the fuel containing unit 3 of the fuel cell body 4 and the nozzle part 9 provided on the cartridge body 8 of the fuel cartridge 5 constitute a pair of coupling mechanisms (coupler). A specific structure of the fuel cell coupler constituted of the socket part 6 and the nozzle part 9 will be described with reference to FIG. 2 and FIG. 3. FIG. 2 and FIG. 3 show a first embodiment of a fuel cell coupler according to the present invention. FIG. 2 shows a state before coupling the nozzle part 9 of the fuel cartridge 5 and the socket part 6 of the fuel cell body 4, and FIG. 3 shows a state after the nozzle part 9 and the socket part 6 are coupled.

In the coupler coupling the fuel cell body 4 and the fuel cartridge 5, the nozzle part (male side coupler) 9 as a cartridge side coupling mechanism has a nozzle head constituted of a base portion 11 and an insertion portion 12. The base portion 11 is attached to a tip opening portion of the cartridge body 8. The insertion portion 12 in a cylindrical shape is formed to project from the base portion 11, and is provided with a nozzle hole at a tip thereof. Here, the nozzle head integrally formed of the base portion 11 and the insertion portion 12 is presented, but the nozzle head may be one having combined parts formed of different materials.

A valve holder 13 in a cup shape is arranged in the nozzle head. The valve holder 13 defines a valve chamber, and a tip side outer edge portion thereof is sandwiched and fixed between the cartridge body 8 and the base portion 11. A valve 14 is arranged in the valve chamber defined by the valve holder 13. The valve 14 has a valve body 14b having a valve head 14a, a valve stem 14c provided on a tip side of the valve body 14b, and a guide pin 14d provided on a rear side of the valve body 14b.

The valve body 14b is arranged in the valve chamber defined by the valve holder 13. The valve stem 14c is housed in the insertion portion 12 in a cylindrical shape. The valve 14 having the valve body 14b and the valve stem 14c is constructed to be capable of moving back and forth in an axial direction (insertion direction of the nozzle part 9). An O-ring 16 is arranged between the valve head 14a and the valve seat 15 formed inside the base portion 11. To the valve body 14b, a force to press the valve head 14a against the valve seat 15 is applied constantly by an elastic member such as a compression spring 17 for example, and the O-ring 16 is pressed by them.

In a normal state (state that the fuel cartridge 5 is disconnected from the fuel cell body 4), the valve head 14a is pressed against the valve seat 15 via the O-ring 16, thereby keeping a fuel channel in the nozzle part 9 in a closed state. On the other hand, when the fuel cartridge 5 is coupled to the fuel cell body 4 as will be described later, the valve stem 14c moves back and the valve head 14a moves away from the valve seat 15, thereby turning the fuel channel in the nozzle part 9 to an open state. A communication hole 13a to be a channel for liquid fuel is provided in a bottom portion of the valve holder 13. The guide pin 14d provided on a rear side of the valve body 14b is inserted through the communication hole 13a.

On the other hand, the socket part (female side coupler) 6 as a fuel cell side coupling mechanism has a socket body 21 in a cylindrical shape. The socket body 21 has an upper body portion 21a, a middle body portion 21b, and a lower body portion 21c. These portions are integrated and embedded in the fuel supply unit 7 of the fuel cell body 4. The upper body portion 21a in a substantially cylindrical shape has a socket hole in which the insertion portion 12 of the nozzle part 9 is inserted.

In the middle body portion 21b of the socket body 21 has a ring-shaped projection 22 projecting to an inside in a radial direction thereof. On the ring-shaped projection 22, a rubber holder 23 is disposed as an elastic-body holder. The rubber holder 23 is arranged in the upper body portion 21a. The rubber holder 23 is given elasticity in an axial direction based on the shape (bellows shape) and the material characteristic (rubber elasticity). The rubber holder 23 is a sealing material forming a sealing with the insertion portion 12 of the nozzle part 9, and the inside thereof is made as a fuel channel.

A valve 24 is arranged in the socket body 21. The valve 24 has a valve body 24b having a valve head 24a, a valve stem 24c provided on a tip side of the valve body 24b, and a guide pin 24d provided on a rear side of the valve body 24b. The valve body 24b is arranged in a valve chamber defined by the middle body portion 21b and the lower body portion 21c. The valve stem 24c is housed in the rubber holder 23. The valve 24 is constructed to be capable of moving back and forth in the axial direction (insertion direction of the nozzle part 9).

An O-ring 26 is arranged between the valve head 24a and the valve seat 25 formed on a lower face side of the ring-shaped projection 22. To the valve body 24b, a force to press the valve head 24a against the valve seat 25 is applied constantly by an elastic member such as a compression spring 27 for example, and the O-ring 26 is pressed by them. In a normal state (state that the fuel cartridge 5 is disconnected from the fuel cell body 4), the valve head 24a is pressed against the valve seat 25 via the O-ring 26, thereby keeping a fuel channel in the socket part 6 in a closed state.

On the other hand, as will be described later, when the fuel cartridge 5 is coupled to the fuel cell body 4, the valve stem 24c moves back and the valve head 24a moves away from the valve seat 25, thereby turning the fuel channel in the socket part 6 to an open state. In the lower body portion 21c of the socket body 21, a communication hole 28 connected to the fuel containing unit 3 via the fuel supply unit 7 is provided. Note that the guide pin 24d provided on a rear side of the valve body 24b is inserted through the communication hole 28.

Thus, in the socket part 6, the fuel channel provided in the socket body 21 is connected to the fuel containing unit 3 via the communication hole 28 provided in the lower body portion 21c. Then, by turning the valves 14, 24 to open states so as to open the channels in the nozzle part 9 and the socket part 6 respectively, the liquid fuel contained in the fuel cartridge 5 can be injected into the fuel containing unit 3 via the nozzle part 9 and the socket part 6.

When supplying the liquid fuel contained in the fuel cartridge 5 to the fuel containing unit 3 of the fuel cell body 4, the nozzle part 9 is inserted in and coupled to the socket part 6 as shown in FIG. 3. On an outer peripheral surface of the insertion portion 12 of the nozzle part 9, for example two guide grooves 18 are formed along the insertion direction of the fuel cartridge 5 (axial direction of the nozzle part 9). On the other hand, on an inner peripheral surface of the socket body 21 of the socket part 6, there is provided key sections 29 which engage with the guide grooves 18 to guide coupling (insertion) of the nozzle part 9 to the socket part 6. The key sections 29 are formed to project inward in the radial direction of the socket body 21 according to the number of guide grooves 18.

An example of shapes of the guide grooves 18 is a straight shape along the axial direction of the insertion portion 12. The guide grooves 18 guide the key sections 29 along the axial direction, and may be ones that displace in a circumferential direction from a middle part so that the nozzle part 9 is locked by the socket part 6. The guide grooves 18 are not limited to the straight shape, and may each be in a J shape. As the key sections 29 which engage with the guide grooves 18, there are applied ones having a boss integrally formed on an inner peripheral surface of the socket body 21, ones constructed such that a key as a member (for example, a metal material) separated from the socket body 21 is inserted in the socket body 21, or the like.

Here, the example in which the guide grooves 18 are formed in the nozzle part 9 and the key sections 29 are provided on the socket part 6 has been explained, but the positions to form the guide grooves 18 and the key sections 29 are not limited thereto. Specifically, a key section may be provided to project on an outer peripheral surface of the insertion portion 12 of the nozzle part 9, and a guide groove engaging therewith may be provided in an inner peripheral surface of the socket body 21 of the socket part 6. By a combination of the key section and the guide groove formed at such positions, coupling (insertion) of the nozzle part 9 to the socket part 6 can be guided.

When the nozzle part 9 is inserted in the socket part 6 while making the key sections 29 engage with the guide grooves 18, first a tip of the insertion portion 12 and a tip of the rubber holder 23 come in contact, and sealing around the fuel channel is established before the valves 14, 24 turn to open states. From the state that the tip of the insertion portion 12 and the rubber holder 23 are in contact, when the nozzle part 9 is inserted into the socket part 6, tips of the valve stem 14c of the nozzle part 9 and the valve stem 24c of the socket part 6 hit against each other. When the nozzle part 9 is inserted further from this state, the valve 24 of the socket part 6 moves back to release the channel, and thereafter the valve 14 of the nozzle part 9 moves back, thereby establishing the fuel channel. Then, the liquid fuel contained in the fuel cartridge 5 is supplied to the fuel containing unit 3 of the fuel cell body 4.

As described above, the nozzle part 9 on the fuel cartridge 5 side tends to be reduced in diameter along with miniaturization or the like of the fuel cell body 4. The nozzle part 9 with a reduced diameter has a risk of being damaged when a bending load (load by a force from a direction having an angle with respect to the insertion direction of the fuel cartridge 5) is applied against the fuel cartridge 5. The risk of the nozzle part 9 to be damaged increases as the diameter thereof is reduced further. Particularly, the fuel cartridge 5 supplying liquid fuel to the fuel cell body 4 that is small, such as the internal vaporization type DMFC, has a risk of the nozzle part 9 to be damaged by the bending load.

Accordingly, in this embodiment, when a bending load is applied to the fuel cartridge 5 coupled to the fuel cell body 4, the nozzle part 9 (specifically the insertion portion 12) is allowed to deform and detach from the socket part 6. Specifically, the insertion portion 12 of the nozzle part 9 is constituted of resin which elastically deforms so as to detach from the socket part 6 when the bending load is applied to the fuel cartridge 5 coupled to the fuel cell body 4. In the case of a nozzle head integrally formed of the base portion 11 and the insertion portion 12, the entire nozzle head is composed of resin which elastically deforms.

In other words, the nozzle part 9 has the insertion portion 12 as a resin part which deforms elastically when a bending load is applied thereto. Alternatively, the nozzle head integrally formed of the base portion 11 and the insertion portion 12 is constituted of a resin part which elastically deforms when the bending load is applied. Thus, by applying a soft resin which deforms easily as the composing material of at least the insertion portion 12 of the nozzle head, it becomes possible to suppress damage to the nozzle part 9.

Further, depending on the direction of a bending load applied to the fuel cartridge 5, there is a risk that the engaging state of a guide groove 18 and a key section 29 and/or the shape (J-shape for example) of the guide groove 18 hinder detachment of the nozzle part 9 from the socket part 6. In this aspect, it is effective to allow the guide groove 18 to deform so that the nozzle part 9 detaches from the socket part 6. Specifically, it is preferable that the insertion portion 12 of the nozzle head, in which the guide groove 18 is formed, is composed of soft resin which can make the guide groove 18 deform plastically so that the nozzle part 9 detaches from the socket part 6 when the bending load is applied to the fuel cartridge 5 coupled to the fuel cell body 4.

The plastic deformation of the guide groove 18 is effective particularly when the key section 29 is formed of metal material or hard resin. Specifically, when the key section 29 that is rigid is engaged with the guide groove 18, it is possible that the key section 29 becomes an obstruction and makes the elastic deformation of the nozzle part 9 by itself not sufficient to allow the nozzle part 9 to detach easily from the socket part 6. Further, also when the guide groove 18 in a J shape is applied for example, it is possible that the key section 29 becomes difficult to be disengaged. In such a case, it is effective to allow the guide groove 18 to deform plastically.

Thus, against the bending load to the fuel cartridge 5, a portion of the nozzle part 9 (specifically the insertion portion 12) is allowed to deform elastically and also the guide groove 18 is allowed to deform plastically so that the key section 29 disengages from the guide groove 18, and thereby the nozzle part 9 can be detached from the socket part 6 without being damaged. Accordingly, it becomes possible to suppress occurrence of a problem due to the nozzle part 9 of the fuel cartridge 5 being damaged.

The nozzle part 9 with at least the insertion portion 12 of the nozzle head being composed of a soft resin part detaches from the socket part 6 when the bending load or the like is applied to the fuel cartridge 5, and hence it is possible to avoid occurrence of a problem such as a broken part of the nozzle part 9 being left on the socket part 6 side. Accordingly, even if the fuel cartridge 5 is damaged, the fuel cell body 4 can be continued to be used safely. In addition, the elastic deformation of the nozzle part 9 and the plastic deformation of the guide groove 18 occur independently or in a complex manner based on the magnitude or the direction of a force applied to the fuel cartridge 5, an engaging state of the guide groove 18 and the key section 29, the shape of the guide groove 18, and/or the like.

For realizing elastic deformation of the nozzle part 9 and plastic deformation of the guide groove 18, it is preferable that the resin part constituting a part of the nozzle part 9 is formed of resin having elasticity modulus for bending of 1800 MPa or lower based on JIS K7171. The part constituted of the resin part is the insertion portion 12 of the nozzle head. The entire nozzle head may be composed of a resin part. Using the resin having elasticity modulus for bending of 1800 MPa or lower, the elastic deformation of the nozzle part 9 and plastic deformation of the guide groove 18 can be realized reliably. In other words, when the bending load is applied to the fuel cartridge 5 coupled to the fuel cell body 4, it is possible to allow the nozzle part 9 to detach from the socket part 6 with better repeatability without damaging the nozzle part 9 and the valve mechanism therein.

Examples of resin (composing material of the resin part) that satisfy the above-described conditions include low-density polyethylene (LDPE), high-density polyethylene (HDPE), linear low-density polyethylene (LLDPE), crosslinked high-density polyethylene (XLPE), high molecular weight polyethylene (HMWPE), ultra high molecular weight polyethylene (UHMWPE), polypropylene (PP), propylene copolymer (PPCO), and the like. Further, in the case where the nozzle part 9 contacts methanol fuel, it is preferable that the resin part has methanol resistance.

Regarding the methanol resistance of a resin part constituting a part of the nozzle part 9, it is preferable to satisfy mass change ratio of 0.3% or lower, length change ratio of 0.5% or lower, and thickness change ratio of 0.5% or lower in an immersion test in pure methanol in accordance with JIS K7114 "Methods of testing plastics for resistance to chemicals." When values of the respective change ratios are smaller than the above values, it is possible that dissolution or a stress cracking in the nozzle part 9 occurs when methanol fuel is accommodated in the fuel cartridge 5 and subjected to practical use, and practical durability and/or reliability of the fuel cartridge 5 decrease.

Note that the mass change ratio, the length change ratio and the thickness change ratio of resin by an immersion test in pure methanol are measured as follows. First, as a test piece, a plate of 30 mm $\times$ 30 mm $\times$ thickness 2 mm is prepared. The mass (M1), the length (L1), and the thickness (T1) of this test piece before the test are measured. Next, the test piece is immersed completely in a test solution (pure methanol having concentration of 99.8%) at 23 $\pm$ 2°C, and is left at rest for seven days with the temperature being maintained. Thereafter, the test piece is taken out of the test solution and washed by water, moisture adhering to the surface of the test piece is removed, and thereafter the mass (M2), length (L2), and thickness (T2) after the test are measured.

The lengths (L1, L2) are each taken from an average value of lengths of the test piece in longitudinal and lateral directions. The thicknesses (T1, T2) are each taken from an average value of thicknesses measured at five positions which are a center portion and corners (5 mm inside from an edge) of the test piece. From the mass (M1), length (L1), thickness (T1) of the test piece before the test, and the mass (M2), length (L2), thickness (T2) after the test, the mass change ratio M, the length change ratio L and the thickness change ratio T are calculated based on the following equation (1), equation (2), and equation (3), respectively.

$$M = \{(M2 - M1)/M1\} \times 100 \ (\%) \ \ldots \ (1)$$

$$L = \{(L2 - L1)/L1\} \times 100 \ (\%) \ \ldots \ (2)$$

$$T = \{(T2 - T1)/T1\} \times 100 \ (\%) \ \dots \ (3)$$

Table 1 shows elasticity modulus for bending and methanol resistance (mass change ratio, length change ratio and thickness change ratio by the immersion test in pure methanol) of low-density polyethylene (LDPE), high-density polyethylene (HDPE), linear low-density polyethylene (LLDPE), high molecular weight polyethylene (HMWPE), ultra high molecular weight polyethylene (UHMWPE), polypropylene (PP).

[Table 1]

| | Elasticity Modulus (MPa) | Methanol Resistance | | |
|---|---|---|---|---|
| | | Mass Change Ratio (%) | Average Length Change Ratio (%) | Average Thickness Change Ratio (%) |
| LDPE | 220 | 0.04 | 0.17 | 0.10 |
| HDPE | 1000 | 0.03 | 0.09 | 0.02 |
| LLDPE | 440 | 0.04 | 0.10 | 0.04 |
| HMWPE | 1590 | 0.18 | 0.38 | 0.12 |
| UHMWPE | 790 | 0.04 | 0.01 | 0.03 |
| PP | 1450 | 0.14 | 0.38 | 0.01 |

Components other than the insertion portion 12 (nozzle head) of the nozzle part 9 and components of the socket part 6 can be formed of the above-described super engineering plastics (PEEK, PPS, LCP, or the like), or general-purpose engineering plastics (PET, PBT, POM), or the like. Further, as long as strength, coupling strength or the like as a coupler can be maintained, soft resin may be applied to parts other than the insertion portion 12 (nozzle head). Moreover, when the guide groove 18 is formed in the socket body 21 of the socket part 6, the socket body 21 is formed of a soft resin which allows the guide groove 18 to plastically deform so that the key section disengages.

Next, results of measuring and evaluating strength of the nozzle part 9 in the cases where the insertion portion 12 of the nozzle head is formed of low-density polyethylene (LDPE), high molecular weight polyethylene (HMWPE), ultra high molecular weight polyethylene (UHMWPE) will be explained. The strength of the nozzle part 9 is measured as follows. In addition, as comparison examples, the strength is measured, similarly to the working examples, of nozzle parts 9 with insertion portions 12 formed of polyphenylene sulfide (PPS), polybutylene terephthalate (PBT), polyacetal (POM), respectively, which are conventional resin materials.

First, the fuel cartridge 5 having a capacity of 100 ml and being empty is prepared, and the nozzle part 9 having the insertion portion 12 (nozzle head) formed of one of the resins is attached thereto. Two holes are bored at 10 mm from a flat surface of the nozzle part 9, and wires are drawn therethrough. The fuel cartridge 5 as such is coupled to the socket part 6 fixed by a jig. A load cell having hooks is attached to the wires, and the wires are pulled at a speed of 50 mm/s perpendicularly with respect to the fuel cartridge 5. The peak load at this time is measured. The pulling direction is two directions, a projecting direction of the key section 29 and a direction perpendicular thereto. Measurement results thereof are shown on Table 2. Note that about the comparison examples, peak loads at the time of applying a load until the nozzle tip breaks are shown.

[Table 2]

| | | Nozzle pulled force [key section direction] ($\times 10^{-2}$ kg•m) | Nozzle pulled force [key section perpendicular direction] ($\times 10^{-2}$ kg•m) |
|---|---|---|---|
| Working Examples | LDPE | 3.6 | 3.2 |
| | HMWPE | 8.8 | 7.4 |
| | UHMWPE | 5.4 | 6.2 |

(continued)

|  |  | Nozzle pulled force [key section direction] ($\times 10^{-2}$ kg•m) | Nozzle pulled force [key section perpendicular direction] ($\times 10^{-2}$ kg•m) |
|---|---|---|---|
| Comparison Examples | PPS | 10.7* | 9.7* |
|  | PBT | 10.6* | 9.7* |
|  | POM | 12.2* | 8.8* |
| *=nozzle tip portion is damaged | | | |

As is clear from the nozzle pulled forces shown in Table 2, all the resins in the working examples detached from the socket part 6 without the nozzle part 9 being damaged. Further, the load at the time when the nozzle part 9 detaches is relatively small, and thus it is understood that the nozzle part 9 can detach easily from the socket part 6 when a bending load is applied to the fuel cartridge 5. Furthermore, the sealing state is maintained favorably without the valve mechanisms being damaged. In contrast, with the resins of the comparison examples, the nozzle part 9 was damaged. Thus, with the fuel cartridges of the working examples, it becomes possible to suppress generation of a problem due to the nozzle part 9 being damaged.

Incidentally, as described above, by constituting a part of the nozzle part 9 by a soft resin part, the nozzle part 9 can detach from the socket part 6 when a bending load is applied to the fuel cartridge 5. However, depending on the applied amount of the bending load and the condition of application, it is possible that the nozzle part 9 (for example the insertion portion 12) deforms plastically intensely. When the bending load that makes the nozzle insertion portion 12 deform plastically intensely is applied, there is a fear that an excessive force operates on the valve 14 and impairs the sealing state. Further, a part of the valve 14 may project from the nozzle part 9 which plastically deformed intensely, which may operate the valve mechanism to operate accidentally and may cause leakage of the liquid fuel. In this aspect, it is effective that the valve mechanism has a divided structure.

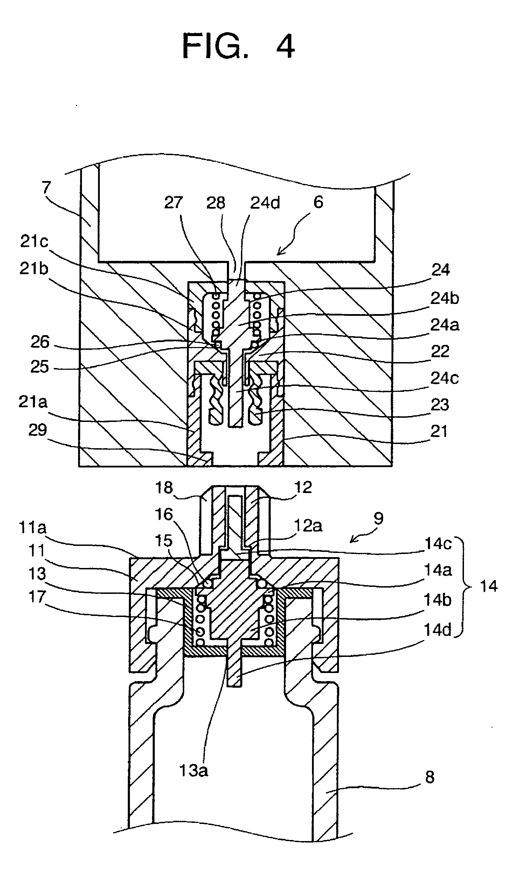

A second embodiment applying a valve mechanism having a divided structure in the nozzle part 9 of the fuel cartridge 5 will be explained with reference to FIG. 4. FIG. 4 shows the structure of a fuel cell 31 according to the second embodiment of the present invention. FIG. 4 is a cross-sectional view showing a coupler with a socket part 6 provided in a fuel cell body 4 and a nozzle part 9 attached to a fuel cartridge 5. Note that the entire structure of the fuel cell 31 is the same as in the first embodiment, and as is shown in FIG. 1. Since the basic coupling mechanism with the socket part 6 and the nozzle part 9 is the same as in the first embodiment, the same parts in FIG. 2 and FIG. 3 are given the same reference sings, and explanations thereof are partially omitted.

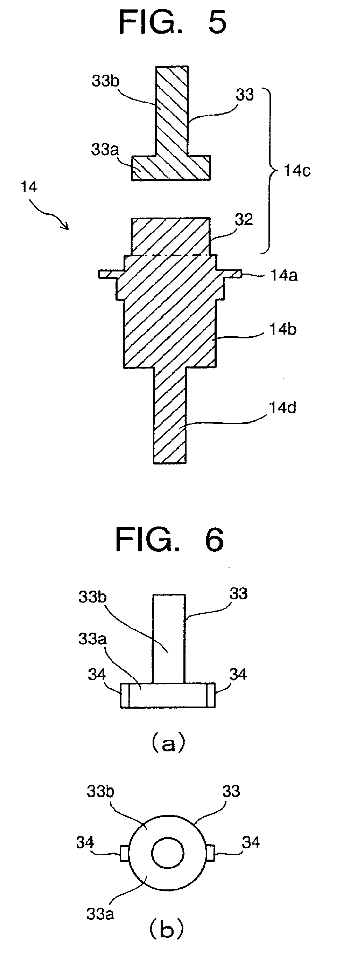

In the fuel cell 31 of the second embodiment, the valve stem 14c of the valve 14 has a divided structure. As shown in FIG. 5, the valve stem 14c has a stem base 32 integrated with the valve body 14b and a stem tip 33 divided from the stem base 32. The valve stem 14c is constituted of two parts, the stem base 32 and the stem tip 33, and these are divided as independent parts from each other. A contact plane between the stem base 32 and the stem tip 33 is a divided plane of the valve stem 14c.

In order not to come off from the insertion portion 12, the stem tip 33 has a large diameter section 33a provided on the stem base 32 side. Specifically, the stem tip 33 has the large diameter section 33a and a small diameter section 33b, and by pushing down the large diameter section 33a with a stepped hole 12a in the insertion portion 12, coming off from the insertion portion 12 is prevented. The stem base 32 has the same diameter as the large diameter section 33a of the stem tip 33. The stem base 32 and the large diameter section 33a of the stem tip 33 are brought into contact to assemble the valve 14, and in this state the valve 14 is arranged in the base portion 11.

When providing a channel for liquid fuel between the valve stem 14c and the inner peripheral wall of the insertion portion 12, the stem base 32 and the stem tip 33 can just be brought into contact to assemble without considering a positional relationship in the circumferential direction. On the other hand, there may be a case that a trench is formed in an axial direction in the outer peripheral surface of the valve stem 14c so as to provide a fuel channel. In this case, as shown in FIG. 6 for example, it is preferable to provide guide keys 34 indicating a position in the circumferential direction respectively in the large diameter section 33a of the stem tip 33 and the stem base 32 (not shown in FIG. 6).

By applying such guide keys 34, the circumferential positions of the stem base 32 and the stem tip 33 can be aligned to assemble the valve 14. Here, the stem tip 33 having the two guide keys 34 is illustrated, but the number of guide keys 34 is not limited and may be one or four for example. Note that in the inner wall surface of the insertion portion 12, a key trench is provided corresponding to the guide keys 34 provided on the valve stem 14c side. By engaging the guide keys 34 on the valve stem 14c side with the key trench on the insertion portion 12, the circumferential positions of the stem base 32 and the stem tip 33 are aligned.

It is preferable that the composing material of the stem tip 33 of the valve stem 14c and the composing material of the valve body 14b with the stem base 32 being integrated have methanol resistance. The methanol resistance is as described above. The valve 14 may be composed of the above-described soft resin, or a super engineering plastic, a general-purpose engineering plastic, or the like for example may be used when the divided structure is applied to the valve 14. Examples of such materials include general-purpose engineering plastics such as polyethylene terephthalate (PET), polybutylene terephthalate (PBT), and polyacetal (POM), and super engineering plastics such as polyphenylene sulfide (PPS), polyetheretherketone (PEEK), and liquid crystal polymer (LCP).

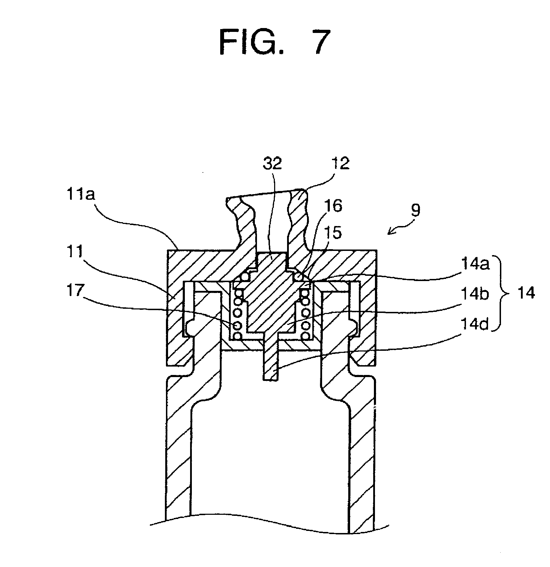

When a bending load is applied to the fuel cartridge 5, depending on the applied amount of the bending load and the condition of application, as shown in FIG. 7, it is possible that a part of the nozzle part 9 (specifically the insertion portion 12 projecting from the base portion 11) plastically deforms intensely. Also in such case, since in the second embodiment the structure in which the valve stem 14c is divided into the stem base 32 and the stem tip 33 is applied, only the stem tip 33 is removed when the insertion portion 12 deforms. Accordingly, damage to the valve mechanism blocking the liquid fuel can be prevented. In other words, it becomes possible to maintain the sealing state of the liquid fuel by the valve 14 favorably.

When the valve stem 14c is integrated with the valve head 14a, there is a fear that an excessive force is applied also to the valve stem 14c when the insertion portion 12 plastically deforms, thereby damaging the sealing state. In this aspect, by dividing the valve stem 14c into the stem base 32 and the stem tip 33, damage to the valve mechani smor the sealing state can be prevented. Further, by the stem tip 33 being removed from the nozzle part 9, it does not happen that the valve stem 14c projects from a flat surface 11a of the base portion 11. Accordingly, the fear of allowing the valve stem 14c projected from the flat surface 11a of the base portion 11 to operate accidentally is eliminated.

When the insertion portion 12 plastically deforms intensely, it is preferable that the stem tip 33 is removed in a manner that the part of the valve stem 14c does not project from the flat surface 11a of the base portion 11. Therefore, it is preferable that the divided plane of the stem base 32 and the stem tip 33 are located on the same plane as the flat surface 11a of the base portion 11 or located more on the valve body 14b side (cartridge body 8 side) than the flat plane 11a. Accordingly, projection of the valve stem 14c can be more securely prevented when the insertion portion 12 is damaged.

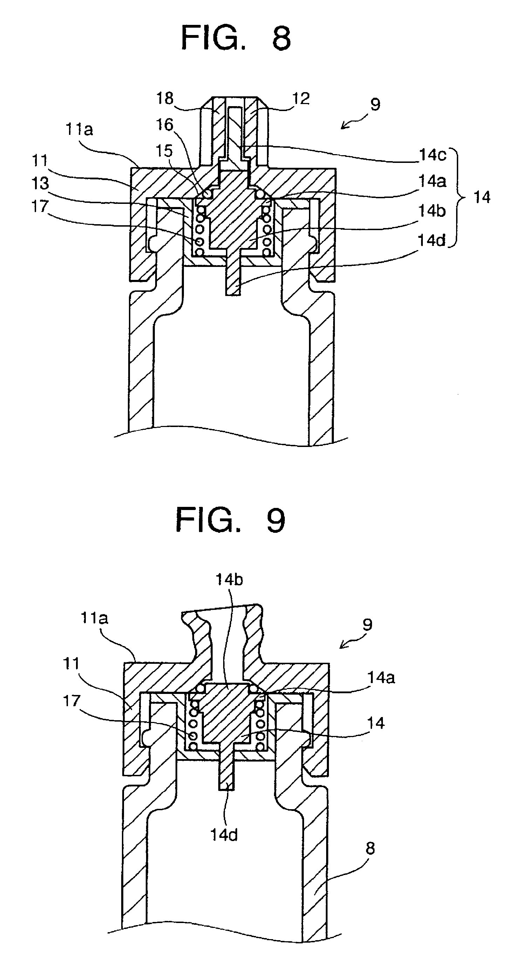

The divided structure applied to the valve 14 is not limited to the structure in which the valve stem 14c is divided into the stem base 32 and the stem tip 33. For example, as shown in FIG. 8, the valve body 14b and the valve stem 14c may be divided. The valve 14 shown in FIG. 8 has a valve body 14b having the valve head 14a and a valve stem 14c arranged on the tip side of the valve body 14b and is divided from the valve body 14b. Note that the other structure is the same as in FIG. 4.

When the valve 14 is divided into the valve body 14b and the valve stem 14c, as shown in FIG. 9, the valve stem 14c is removed when the insertion portion 12 is damaged, so that the valve mechanism and the sealing state by the valve mechanism can be maintained favorably. Furthermore, it does not happen that a part of the valve 14 projects from the flat plate 11a of the base portion 11 after the insertion portion 12 is damaged. According to the structure in which the valve body 14b and the valve stem 14c are divided, the surface (divided plane) of the valve body 14b exists inside the nozzle part 9, and liquid leakage by malfunction of the valve mechanism can be prevented securely.

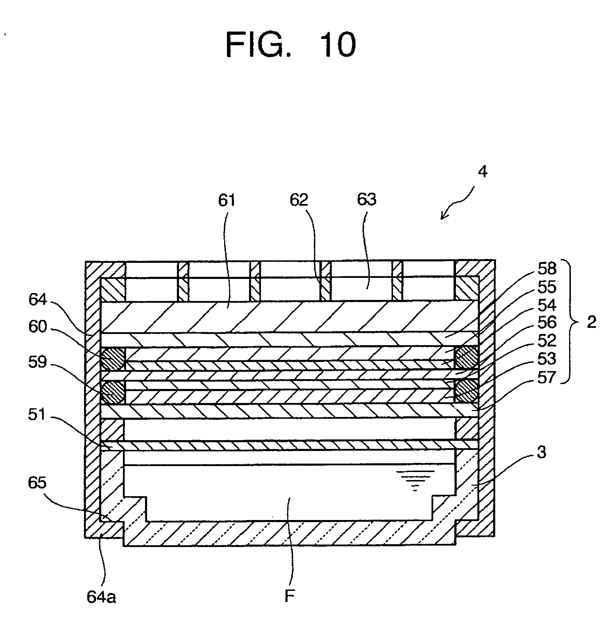

Next, specific structures of the fuel cell body 4 in the fuel cells 1, 31 in the above-described respective embodiments will be explained. The fuel cell body 4 is not limited particularly, and for example a DMFC of passive type or active type can be applied, to which the satellite type fuel cartridge 5 is coupled as necessary. Here, an embodiment applying a DMFC of internal vaporization type to the fuel cell body 4 will be explained with reference to FIG. 10. The DMFC 4 of internal vaporization type (passive type) shown in FIG. 10 has, in addition to the fuel cell unit 2 constituting an electromotive unit and the fuel containing unit 3, a vapor selecting and permeating film 51 interposed therebetween.

The fuel cell unit 2 has a membrane electrode assembly (MEA) constituted of an anode (fuel electrode) having an anode catalyst layer 52 and an anode gas diffusion layer 53, a cathode (oxidant electrode/air electrode) having a cathode catalyst layer 54 and a cathode gas dif fusion layer 55, andaproton (hydrogenion)-conductive electrolyte film 56 sandwiched by the anode catalyst layer 52 and the cathode catalyst layer 54.

Examples of catalysts contained in the anode catalyst layer 52 and cathode catalyst layer 54 include single element of the platinum group such as Pt, Ru, Rh, Ir, Os, Pd, and so on, alloys including element of the platinum group, and the like. For the anode catalyst layer 52, it is preferable to use Pt-Ru, Pt-Mo or the like having strong resistance against methanol and carbon monoxide. For the cathode catalyst layer 54, it is preferable to use Pt, Pt-Ni, or the like. The catalyst may be either a support catalyst using a conductive support such as carbon material or a non-supported catalyst.

Examples of a proton conductive material constituting the electrolyte film 56 include fluorine resin such as perfluoro sulfonic acid polymer having the sulfonic acid group (Nafion (name of product made by Dupont), Flemion (name of product made by Asahi Glass Co., Ltd), or the like), hydrocarbon resin having sulfonic acid group, inorganic substances such as tungstic acid and phosphotungstic acid, and the like. However, the proton-conductive electrolyte film 56 is not limited thereto.

The anode gas diffusion layer 53 layered on the anode catalyst layer 52 serves a role to supply fuel to the anode catalyst layer 52 evenly, and simultaneously combines a role of current collector for the anode catalyst layer 52. The cathode gas diffusion layer 55 layered on the cathode catalyst layer 54 serves a role to supply oxidant to the cathode catalyst layer 54 evenly, and simultaneously combines a role of current collector for the cathode catalyst layer 54.

An anode conductive layer 57 is layered on the anode gas diffusion layer 53, and a cathode conductive layer 58 is layered on the cathode gas diffusion layer 55. These conductive layers 57, 58 are each constituted of, for example, a mesh formed of conductive metal material such as gold, a porous film, a thin film, or the like. Rubber O-rings 59, 60 are interposed respectively between the electrolyte film 56 and the anode conductive layer 57, and between the electrolyte film 56 and the cathode conductive layer 58, and they prevent leakage of fuel or oxidant from the fuel cell unit 2.

In the fuel containing unit 3 such as a fuel tank, methanol fuel is filled as liquid fuel F. The fuel containing unit 3 has a box-shaped container that contains the liquid fuel F, and a face opposing the anode (fuel electrode) of the box-shaped container is opened. The vapor selecting and permeating film 51 is arranged between this opening portion of the fuel containing unit 3 and the fuel cell unit 2. The vapor selecting and permeating film 51 is a vapor/liquid separating film through which only vaporized components of the liquid fuel F can permeate and liquid components cannot permeate.

An example of a composing material of the vapor selecting and permeating film 51 is fluorine resin such as polytetrafluoroethylene. The fuel cell unit 2 is supplied with only vaporized components of the liquid fuel F via the vapor selecting and permeating film 51. The vaporized components of the liquid fuel F mean an air-fuel mixture constituted of vaporized components of methanol and vaporized components of water when a methanol solution is used as the liquid fuel F, and mean vaporized components of methanol when pure methanol is used.

A moisture retention layer 61 is layered on the cathode conductive layer 58, and a surface layer 62 is layered further thereon. The surface layer 62 has a function to adjust an amount of air taken in as oxidant, and adjustment thereof can be performed by the number, size or the like of air introducing holes 63 formed in the surface layer 62. The moisture retention layer 61 serves a role of suppressing evaporation of water by being impregnated with part of water generated by the cathode catalyst layer 54, and also has a function to introduce oxidant evenly to the cathode gas diffusion layer 55 so as to facilitate even diffusion of oxidant to the cathode catalyst layer 54. The moisture retention layer 61 is constituted of a member having a porous structure. An example of a specific composing material thereof is a porous body of polyethylene, polypropylene, or the like.

On the fuel containing unit 3, the vapor selecting and permeating film 51, the fuel cell unit 2, the moisture retention layer 61, and the surface layer 62 are layered sequentially, and further a stainless cover 64 for example is placed thereon to retain the entire body. By retaining all the components by the cover 64, the internal vaporization type DMFC (fuel cell body) 4 of this embodiment is formed. The cover 64 has openings provided at positions corresponding to the air introducing holes 63 formed in the surface layer 62.

A terrace 65 receiving claws 64a of the cover 64 is provided on the fuel containing unit 3. The claws 64a are crimped onto this terrace 65 to thereby retain the entire fuel cell body 4 integrally with the cover 64. Although omitted in FIG. 10, the fuel supply unit 7 having the socket part 6 is provided on a lower surface side of the fuel containing unit 3 as shown in FIG. 1.

In the internal vaporization type DMFC (fuel cell body) 4 having the above-described structure, the liquid fuel F (methanol solution for example) in the fuel containing unit 3 vaporizes, and vaporized components thereof pass through the vapor selecting and permeating film 51 and are supplied to the fuel cell unit 2. In the fuel cell unit 2, the vaporized components of the liquid fuel F are diffused in the anode gas diffusion layer 53 and supplied to the anode catalyst layer 52. The vaporized components supplied to the anode catalyst layer 52 cause internal reforming reaction of methanol as represented by the following equation (4).

$$CH_3OH + H_2O \rightarrow CO_2 + 6H^+ + 6e^- \qquad (4)$$

On the other hand, when pure methanol is used as the liquid fuel F, moisture vapor is not supplied from the fuel containing unit 3, and hence water generated in the cathode catalyst layer 54 or water in the electrolyte film 56 is brought to react with methanol to cause the internal reforming reaction of the equation (4). Alternatively, internal reforming reaction is caused by another reaction mechanism that does not require water, not by the internal reforming reaction of the equation (4).

Proton ($H^+$) generated by the internal reforming reaction is conducted through the electrolyte film 56 and reaches the cathode catalyst layer 54. Air (oxidant) taken in through the air introducing holes 63 in the surface layer 62 diffuses through the moisture retention layer 61, the cathode conductive layer 58, and the cathode gas diffusion layer 55, and is supplied to the cathode catalyst layer 54. The air supplied to the cathode catalyst layer 54 causes reaction represented by the following equation (5). This reaction causes power generation reaction which accompanies generation of water.

$$(3/2)O_2 + 6H^+ + 6e^- \rightarrow 3H_2O \qquad (5)$$

As the power generation reaction based on the above-described reaction proceeds, the liquid fuel F (methanol solution or pure methanol for example) in the fuel containing unit 3 is consumed. Since the power generation reaction stops as soon as the liquid fuel F in the fuel containing unit 3 runs out, liquid fuel is supplied to the fuel containing unit 3 from the fuel cartridge 5 at the moment of run out or a moment before that. Supply of liquid fuel from the fuel cartridge 5 is implemented by inserting the nozzle part 9 of the fuel cartridge 5 side in the socket part 6 of the fuel cell body 4 side to thereby couple them as described above.

The present invention is preferable for a passive-type DMFC of internal vaporization type or the like which are currently miniaturized. However, the coupler and the fuel cell according to the present invention are not limited to any particular type, mechanism, or the like of a fuel cell as long as the fuel cell is supplied with liquid fuel by a fuel cartridge. Such coupler and fuel cell are also included in the present invention. Further, the embodiments of the present invention can be extended or changed within the range of the technical scope of the present invention, and such extended and modified embodiments are also included in the technical scope of the present invention.

Industrial Applicability

By the fuel cell coupler according to an aspect of the present invention, it is possible to allow the nozzle part to deform and detach from the socket part when a bending load is applied to the fuel cartridge coupled to the fuel cell body. By the fuel cell coupler according to another aspect of the present invention, the nozzle part can be detached from the socket part by allowing the guide groove to deform when a bending load is applied to the fuel cartridge coupled to the fuel cell body. Such fuel cell couplers are effectively used as a coupling mechanism for a fuel cell and a fuel cartridge.

**Claims**

1.    A fuel cell coupler, comprising:

   a nozzle part (9) to be provided on a fuel cartridge (5), the nozzle part (9) including a valve mechanism; and
   a socket part (6) to be provided in a fuel cell body (4), the socket part (6) including a valve mechanism and adapted to be coupled detachably to the nozzle part (9),

   wherein the nozzle part (9) has a resin part (11,12,18) which deforms so as to detach from the socket part (6) when a bending load is applied to the fuel cartridge (5) coupled to the fuel cell body (4).

2.    The fuel cell coupler according to claim 1, wherein the nozzle part (9) detaches from the socket part (6) by elastic deformation of the resin part (11,12,18) against the bending load.

3.    The fuel cell coupler according to claim 1 or 2, wherein the nozzle part (9) comprises a nozzle head to be attached to the fuel cartridge (5) and the valve mechanism is arranged in the nozzle head, and at least a part of the nozzle head is constituted of the resin part (11,12,18).

4.    The fuel cell coupler according to claim 3, wherein the nozzle head has a base portion (11) to be attached to the fuel cartridge (5) and an insertion portion (12) formed so as to project from the base portion (11) and adapted to be inserted into the socket part (6), and at least the insertion portion (12) is constituted of the resin part.

5.    The fuel cell coupler according to any one of claims 1 to 4, wherein the valve mechanism of the nozzle part (9) has a divided structure.

6.    The fuel cell coupler according to claim 5, wherein the valve mechanism of the nozzle part (9) comprises a valve body (14b) having a valve head (14a), a valve stem (14c) provided on a tip side of the valve body (14b) and divided in an axial direction, and an elastic member (17) which presses the valve head (14a) against a valve seat (15) provided in the nozzle part (9) so as to keep a fuel channel in the nozzle part (9) in a closed state.

7.    The fuel cell coupler according to claim 5, wherein the valve mechanism of the nozzle part (9) comprises a valve body (14b) having a valve head (14a), a valve stem (14c) provided on a tip side of the valve body (14b) and divided from the valve body (14b), and an elastic member (17) which presses the valve head (14a) against a valve seat (15) provided in the nozzle part (9) so as to keep a fuel channel in the nozzle part (9) in a closed state.

8.    The fuel cell coupler according to claim 1, comprising:

a guide groove (18) formed in one of the nozzle part (9) or the socket part (6); and
a key section (29) formed in the other one of the nozzle part (9) or the socket part (6) and adapted to engage with the guide groove (18) so as to guide coupling of the nozzle part (9) to the socket part (6), wherein the guide groove (18) is formed in the resin part and deforms so that the nozzle part (9) detaches from the socket part (6) when the bending load is applied to the fuel cartridge (5) coupled to the fuel cell body (4).

9. The fuel cell coupler according to claim 8, wherein the nozzle part (9) detaches from the socket part (6) by the guide groove (18) plastically deforming so that the key section (29) disengages against the bending load.

10. The fuel cell coupler according to claim 8 or 9, wherein the nozzle part (9) comprises a nozzle head having a base portion (11) to be attached to the fuel cartridge (5) and an insertion portion (12) formed so as to project from the base portion (11) and adapted to be inserted into the socket part (6) with at least the insertion portion (12) being constituted of the resin part, and the guide groove (18) is formed in the insertion portion (12).

11. The fuel cell coupler according to any one of claims 1 to 10, wherein the resin part (11,12,18) is composed of a resin having elasticity modulus for bending of 1800 MPa or lower based on JIS K7171.

12. The fuel cell coupler according to any one of claims 1 to 10, wherein the resin part (11,12,18) is composed of a resin having a mass change ratio of 0.3% or lower, a length change ratio of 0.5% or lower, and a thickness change ratio of 0.5% or lower in an immersion test in pure methanol in accordance with JIS K7114.

13. The fuel cell coupler according to any one of claims 1 to 12, wherein the resin part (11,12,18) is composed of at least one of resin selected from low-density polyethylene, high-density polyethylene, linear low-density polyethylene, crosslinked high-density polyethylene, high molecular weight polyethylene, ultra high molecular weight polyethylene, polypropylene, and propylene copolymer.

14. A fuel cell, comprising:

a fuel cartridge (5) which comprises a cartridge body containing liquid fuel for a fuel cell;
a fuel cell body (4) which comprises a fuel containing unit and an electromotive unit which is supplied with the liquid fuel from the fuel containing unit and operates to generate power; and
a fuel cell coupler according to any one of claims 1 to 13 arranged such that the nozzle part (9) thereof is provided on the cartridge body and the socket part (6) thereof is provided to the fuel cell body (4).

15. The fuel cell according to claim 14, wherein the electromotive unit has a fuel electrode, an oxidant electrode, and an electrolyte film sandwiched by the fuel electrode and the oxidant electrode, and a vapor selecting and permeating film, which supplies vapor components of the liquid fuel to the fuel electrode, is arranged between the fuel containing unit and the electromotive unit.

**Patentansprüche**

1. Ein Brennstoffzellenkoppler, mit:

einem Mundstückteil (9), das an einer Brennstoffkassette (5) vorzusehen ist, wobei das Mundstückteil (9) einen Ventilmechanismus umfaßt, und
einem Sockelteil (6), der in einem Brennstoffzellenkörper (4) vorzusehen ist, wobei der Sockelteil (6) einen Ventilmechanismus umfaßt und lösbar mit dem Mundstückteil (9) gekoppelt werden kann,

wobei das Mundstückteil (9) ein Harzteil (11,12,18) besitzt, das sich zum Trennen von dem Sockelteil (6) verformt, wenn eine Biegelast auf die mit dem Brennstoffzellenkörper (4) gekoppelte Brennstoffkassette (5) einwirkt.

2. Der Brennstoffzellenkoppler gemäß Anspruch 1, wobei das Mundstückteil (9) sich von dem Sockelteil (6) durch eine elastische Verformung des Harzteils (11,12,18) gegen die Biegelast trennt.

3. Der Brennstoffzellenkoppler gemäß Anspruch 1 oder 2,
wobei das Mundstückteil (9) einen Mundstückkopf aufweist, der an der Brennstoffkassette (5) anzubringen ist, und der Ventilmechanismus in dem Mundstückkopf angeordnet ist, und zumindest ein Teil des Mundstückkopfes durch das Harzteil (11,12,18) gebildet ist.

4. Der Brennstoffzellenkoppler gemäß Anspruch 3, wobei der Mundstückkopf einen Basisabschnitt (11), der an der Brennstoffkassette (5) anzubringen ist, und einen Einsetzabschnitt (12), der so ausgebildet ist, daß er von dem Basisabschnitt (11) vorsteht und in den Sockelteil (6) eingesetzt werden kann, besitzt, und zumindest der Einsetzabschnitt (12) durch das Harzteil gebildet ist.

5. Der Brennstoffzellenkoppler gemäß einem der Ansprüche 1 bis 4, wobei der Ventilmechanismus des Mundstückteils (9) eine unterteilte Struktur besitzt.

6. Der Brennstoffzellenkoppler gemäß Anspruch 5, wobei der Ventilmechanismus des Mundstückteils (9) einen Ventilkörper (14b) umfaßt, der einen Ventilkopf (14a), einen Ventilschaft (14c), welcher an einer Vorderseite des Ventilkörpers (14b) vorgesehen und in einer Axialrichtung unterteilt ist, sowie ein elastisches Element (17) umfaßt, welches den Ventilkopf (14a) gegen einen Ventilsitz (15) drückt, der in dem Mundstückteil (9) so vorgesehen ist, daß er einen Brennstoffkanal in dem Mundstückteil (9) in einem geschlossenen Zustand hält.

7. Der Brennstoffzellenkoppler gemäß Anspruch 5, wobei der Ventilmechanismus des Mundstückteils (9) einen Ventilkörper (14b) mit einem Ventilkopf (14a), einem Ventilschaft (14c), welcher an einer Vorderseite des Ventilkörpers (14b) vorgesehen und von dem Ventilkörper (14b) getrennt ist, sowie ein elastisches Element (17) umfaßt, das den Ventilkopf (14a) gegen einen Ventilsitz (15) drückt, der in dem Mundstückteil (9) so vorgesehen ist, daß er einen Brennstoffkanal in dem Mundstückteil (9) in einem geschlossenen Zustand hält.

8. Der Brennstoffzellenkoppler gemäß Anspruch 1, mit:

   einer Führungsnut (18), die in dem Mundstückteil (9) oder dem Sockelteil (6) ausgebildet ist, und
   einem Schlüsselabschnitt (29), der in dem anderen, dem Mundstückteil (9) oder dem Sockelteil (6), ausgebildet ist und mit der Führungsnut (18) in Eingriff gelangen kann, um das Koppeln des Mundstückteils (9) mit dem Sockelteil (6) zu führen, wobei die Führungsnut (18) in dem Harzteil ausgebildet ist und sich so verformt, daß das Mundstückteil (9) sich von dem Sockelteil (6) trennt, wenn die Biegelast auf die mit dem Brennstoffzellenkörper (4) gekoppelte Brennstoffkassette (5) einwirkt.

9. Der Brennstoffzellenkoppler gemäß Anspruch 8, wobei das Mundstückteil (9) sich von dem Sockelteil (6) durch die sich plastisch verformende Führungsnut (18) trennt, so daß der Schlüsselabschnitt (29) gegen die Biegelast außer Eingriff gelangt.

10. Der Brennstoffzellenkoppler gemäß Anspruch 8 oder 9, wobei das Mundstückteil (9) einen Mundstückkopf mit einem Basisabschnitt (11), der an der Brennstoffkassette (5) anzubringen ist, und einen Einsetzabschnitt (12), der so ausgebildet ist, daß er von dem Basisabschnitt (11) vorsteht und in den Sockelteil (6) eingeführt werden kann, umfaßt, wobei zumindest der Einsetzabschnitt (12) aus dem Harzteil gebildet ist und die Führungsnut (18) in dem Einsetzabschnitt (12) ausgebildet ist.

11. Der Brennstoffzellenkoppler gemäß einem der Ansprüche 1 bis 10, wobei das Harzteil (11,12,18) aus einem Harz mit einem Elastizitätsmodul gegenüber Biegen von 1800 MPa oder niedriger auf Basis der JIS K7171 gebildet ist.

12. Der Brennstoffzellenkoppler gemäß einem der Ansprüche 1 bis 10, wobei das Harzteil (11,12,18) aus einem Harz gebildet ist, das ein Massenänderungsverhältnis von 0,3 % oder weniger, ein Längenänderungsverhältnis von 0,5 % oder weniger und ein Dickenänderungsverhältnis von 0,5 % oder weniger bei einem Tauchtest in reinem Methanol gemäß der JIS K7114 besitzt.

13. Der Brennstoffzellenkoppler gemäß einem der Ansprüche 1 bis 12, wobei das Harzteil (11,12,18) aus mindestens einem Harz gebildet ist, das aus der folgenden Gruppe ausgewählt ist: Polyethylen niedriger Dichte, Polyethylen hoher Dichte, lineares Polyethylen niedriger Dichte, vernetztes Polyethylen hoher Dichte, Polyethylen mit hohem Molekulargewicht, Polyethylen mit ultrahohem Molekulargewicht, Polypropylen und Propylen-Copolymer.

14. Eine Brennstoffzelle mit:

   einer Brennstoffkassette (5), die einen Kassettenkörper umfaßt, der einen flüssigen Brennstoff für eine Brennstoffzelle enthält,

einem Brennstoffzellenkörper (4), der eine Brennstoffenthaltende Einheit und eine elektromotorische Einheit, welche mit dem flüssigen Brennstoff von der Brennstoffenthaltenden Einheit versorgt wird und zum Erzeugen von Energie arbeitet, umfaßt und

einem Brennstoffzellenkoppler gemäß einem der Ansprüche 1 bis 13, der so angeordnet ist, daß das Mundstückteil (9) davon an dem Kassettenkörper und der Sockelteil (6) davon an dem Brennstoffzellenkörper (4) vorgesehen ist.

15. Die Brennstoffzelle gemäß Anspruch 14, wobei die elektromotorische Einheit eine Brennstoffelektrode, eine Oxidationselektrode und einen Elektrolytfilm aufweist, welcher zwischen der Brennstoffelektrode und der Oxidationselektrode eingefügt ist, sowie eine Schicht zum Wählen und Durchlassen von Dampf, welche Dampfkomponenten des flüssigen Brennstoffs der Brennstoffelektrode zuführt und die zwischen der Brennstoff enthaltenden Einheit und der elektromotorischen Einheit angeordnet ist.

**Revendications**

1. Coupleur de pile à combustible comprenant :

une partie (9) formant buse à prévoir sur une cartouche (5) de combustible, la partie (9) formant buse comprenant une mécanisme de vanne ; et
une partie (6) formant manchon à prévoir dans un corps (4) de pile à combustible, la partie (6) formant manchon comprenant un mécanisme de vanne étant conçu pour être couplée de manière amovible à la partie (9) formant buse,

dans lequel la partie (9) formant buse a une partie (11, 12, 18) en résine qui se déforme de manière à se détacher de la partie (6) formant manchon lorsqu'une charge en flexion est appliquée à la cartouche (5) de combustible couplée au corps (4) de la pile à combustible.

2. Coupleur de pile à combustible suivant la revendication 1, dans lequel la partie (9) formant buse se détache de la partie (6) formant manchon par déformation élastique de la partie (11, 12, 18) en résine à l'encontre la charge en flexion.

3. Coupleur de pile à combustible suivant la revendication 1 ou 2, dans lequel la partie (9) formant buse comprend une tête de buse à fixer à la cartouche (5) de combustible et le mécanisme de vanne est disposée dans la tête de la buse et au moins une partie de la tête de la buse est constituée de la partie (11, 12, 18) en résine.

4. Coupleur de pile à combustible suivant la revendication 3, dans lequel la tête de la buse a une partie (11) de base à fixer à la cartouche (5) de combustible et une partie (12) d'insertion formé de manière à faire saillie de la partie (11) et est conçue pour être insérée dans la partie (6) formant manchon et au moins la partie (12) d'insertion est constituée en la partie en résine.

5. Coupleur de pile à combustible suivant l'une quelconque des revendications 1 à 4, dans lequel le mécanisme de vanne de la partie (9) formant buse a une structure divisée.

6. Coupleur de pile à combustible suivant la revendication 5, dans lequel le mécanisme de vanne de la partie (9) formant buse comprend un corps (14b) de vanne, une tige (14c) de vanne prévue sur un côté de pointe du corps (14b) de vanne et subdivisée dans une direction axiale et un élément (17) élastique qui pousse la tête (14a) de vanne sur un siège (15) de vanne prévu dans la partie (9) de buse de manière à maintenir un canal pour du combustible dans la partie (9) de buse dans un état fermé.

7. Coupleur de pile à combustible suivant la revendication 5, dans lequel le mécanisme de vanne de la partie (9) formant buse comprend un corps (14b) de vanne ayant une tête (14a) de vanne, une tige (14c) de vanne prévue sur un côté de pointe du corps (14b) de vanne et séparée du corps (14b) de vanne et un élément (17) élastique qui pousse la tête (14a) de vanne sur un siège (15) de vanne prévu dans la partie (9) de buse de manière à maintenir un canal de combustible dans la partie (9) de buse dans un état fermé.

8. Coupleur de pile à combustible suivant la revendication 1,
comprenant une rainure (18) de guidage formée dans l'une de la partie (9) formant buse ou de la partie (6) formant manchon ; et

une section (29) de clavette formée dans l'autre de la partie (9) formant buse ou de la partie (6) formant manchon et conçue pour coopérer avec la rainure (18) de guidage de manière à guider l'accouplement de la partie (9) formant buse à la partie (6) formant manchon, la rainure (18) de guidage étant formée dans la partie à résine et se déformant de sorte que la partie (9) formant buse se détache de la partie (6) formant manchon lorsque la charge en flexion est appliquée à la cartouche (5) de combustible couplée au corps (4) de la pile à combustible.

9. Coupleur de pile à combustible suivant la revendication 8, dans lequel la partie (9) formant buse se détache de la partie (6) formant manchon par le fait que la rainure (18) de guidage se déforme plastiquement de sorte que la section (29) de clavette se désengage à l'encontre de la charge en flexion.

10. Coupleur de pile à combustible suivant la revendication 8 ou 9, dans lequel la partie (9) formant buse comprend une tête de buse ayant une partie (11) de base à fixer à la cartouche (5) de combustible et une partie (12) d'insertion formée de manière à faire saillie de la partie (11) de base et conçue pour être insérée dans la partie (6) formant manchon, au moins la partie (12) d'insertion étant dans la partie en résine et la rainure (18) de guidage étant formée dans la partie (12) d'insertion.

11. Coupleur de pile à combustible suivant l'une quelconques des revendications 1 à 10, dans lequel la partie (11, 12, 18) est composée d'une résine ayant un module d'élasticité en flexion inférieure ou égale à 1800 MPa sur la base de JIS K7171.

12. Coupleur de pile à combustible suivant l'une quelconques des revendications 1 à 10, dans lequel la partie (11, 12, 18) en résine est composée d'une résine ayant un rapport de changement de masse inférieur ou égal à 0,3%, un rapport de changement de longueur inférieur ou égal à 0,5% et un rapport de changement d'épaisseur inférieur ou égal à 0,5° dans un test d'immersion dans du méthanol pur suivant JIS K7114.

13. Coupleur de pile à combustible suivant l'une quelconques des revendications 1 à 12, dans lequel la partie (11, 12, 18) en résine est composée d'au moins une résine choisie parmi du polyéthylène basse densité, du polyéthylène haute densité, du polyéthylène linéaire basse densité, du polyéthylène réticulé haute densité, du polyéthylène à haut poids moléculaire, du polyéthylène d'ultra haut poids moléculaire, du polypropylène et un copolymère de propylène.

14. Pile à combustible comprenant :

une cartouche (5) de combustible, qui comprend un corps de cartouche comprenant du combustible liquide pour une pile à combustible ;
un corps (4) de pile à combustible, qui comprend une unité contenant du combustible et une unité électromotrice qui est alimentée en combustible liquide par l'unité contenant du combustible et qui fonctionne pour produire de l'électricité ; et
un coupleur de pile à combustible suivant l'une quelconque des revendications 1 à 13, disposé de manière à ce que sa partie (9) formant buse soit prévue sur le corps de la cartouche et que sa partie (9) formant manchon soit prévue sur le corps (4) de la pile à combustible.

15. Pile à combustible suivant la revendication 14, dans lequel l'unité électromotrice à une électrode à combustible, une électrode à oxydant et une pellicule d'électrolyte prise en sandwich par l'électrode à combustible et l'électrode à oxydant, et un film de sélection et de perméation de la vapeur, qui fournit des vapeurs de constituants du combustible liquide à l'électrode à combustible, est disposé entre l'unité contenant du combustible et l'unité électromotrice.

# FIG. 1

# FIG. 2

# FIG. 3

# FIG. 4

# FIG. 5

33b

33a

33 } 14c

32

14

14a

14b

14d

# FIG. 6

33b

33a

34

33

34

(a)

33b

34

33

34

33a

(b)

# FIG. 7

# FIG. 8

# FIG. 9

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413111 B
- JP 2004171844 A
- JP 2004127824 A
- US 20050022883 A1